Europäisches Patentamt

European Patent Office

Office européen des brevets

(11) Publication number: **0 158 332 B1**

# EUROPEAN PATENT SPECIFICATION

(45) Date of publication of patent specification: 03.07.91    (51) Int. Cl.⁵: **H04N 1/40**

(21) Application number: **85104299.4**

(22) Date of filing: **09.04.85**

(54) Image reading apparatus.

(30) Priority: **09.04.84 JP 71605/84**

(43) Date of publication of application:
**16.10.85 Bulletin 85/42**

(45) Publication of the grant of the patent:
**03.07.91 Bulletin 91/27**

(84) Designated Contracting States:
**DE FR GB**

(56) References cited:
**EP-A- 0 104 407**
**DE-A- 3 144 219**

**PATENT ABSTRACTS OF JAPAN, vol. 6, no.
81 (E-107)[959], 19th May 1982; & JP-A-57 17
263 (MITSUBISHI DENKI K.K.) 28-01-1982**

(73) Proprietor: **SHARP KABUSHIKI KAISHA
22-22 Nagaike-cho Abeno-ku
Osaka 545(JP)**

(72) Inventor: **Nagano, Fumikazu
46-13, Izumihara-cho
Yamatokoriyama-shi Nara-ken(JP)**

(74) Representative: **Selting, Günther, Dipl.-Ing. et
al
Deichmannhaus am Hauptbahnhof
W-5000 Köln 1(DE)**

## Description

The present invention relates to an image reading apparatus and, more particularly, to an image reading apparatus applied to a color scanner, a color facsimile or the like, which uses a single CCD sensor receiving red, green and blue light sequentially transmitted by light sources and reflected by the image to be read.

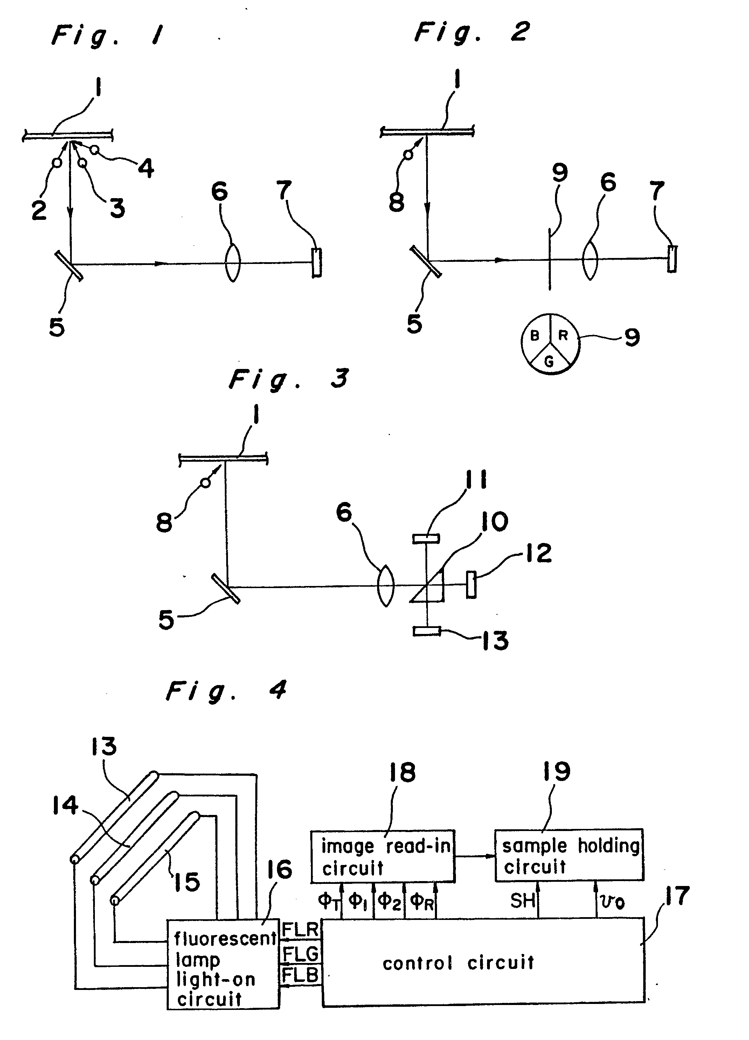

Conventionally, Fig. 1 through Fig. 3 show an optical system in an image reading apparatus which is the background of this invention, and to which one embodiment of the present invention is applied. In an example shown in Fig. 1, there are provided an R fluorescent lamp 2 which transmits red light to a colored manuscript 1, a G fluorescent lamp 3 which transmits green light thereto, and a B fluorescent lamp 4 which transmits blue light thereto. The light reflected from the colored manuscript 1 through a mirror 5 is directed to a lens 6 which focuses the light to a CCD sensor 7.

In an example shown in Fig. 2, only one fluorescent lamp 8 of an ordinary light is provided for the colored manuscript 1. The reflection light from the colored manuscript 1 in accordance with the light from the fluorescent lamp 8 is reflected by the mirror 5 and is separated into the respective light components of the red, green, blue of the colored manuscript 1 by a filter disk 9 so as to be inputted into the CCD sensor 7 through the lens 6.

In an example shown in Fig. 3, a dichroic mirror 10, instead of a filter disk 9 shown in Fig. 2, is disposed behind the lens 6 to separate the light of the colored manuscript 1 into the light components of the red, green, blue thereof so as to be respectively inputted into an R reading CCD sensor 11, a G reading CCD sensor 12 and a B reading CCD sensor 13.

The CCD sensors 7, 11 through 13 shown in the above-described Fig. 1 through Fig. 3 output photoelectric charge generated by light incidence. The photoelectric charge not shown is loaded on an analog shift register and is sequentially shifted in accordance with a shift clock pulse. The photoelectric charge caused due to some light leakage is impinged on the analog shift register added upon shifting the content of the analog shift register. Furthermore, the photoelectric charge from the sensor to the analog shift register is not completely transferred by one shift, thus resulting in some short shipment of load remaining. The above-described two facts are responsible for deterioration in the accuracy of the colour resolution in the conventional image reading apparatus, and the measures against them have not been taken at all or have been neglected.

From DE V-A- 31 44 219 A1 a CCD-transducer is known in which a transfer control means prohibits the CCD-sensor outputs from being fed to an analog shift register during a scanning period in which the light source is turned on, and feeds the CCD-sensor outputs to the analog shift register during a reading period in which the light source is turned off. In the reading period, the content of the analog shift register is read out by applying shift clock pulses with a first frequency thereto fed from a clock pulse control means. The above-mentioned problems of light leakage impinging on the analog shift register and of not completely transferring the content of the shift register are not considered in this document.

It is the object of the invention to provide an image reading apparatus in which an accurate colour resolution is obtained.

According to the invention, this object is solved in that the light unit includes several light sources transmitting light in different colours during the entire of each scanning period, the clock pulse control means to said analog shift register means feeds shift clock pulses having a second frequency higher than the first frequency, and within each scanning period, one of the light sources is turned on at the beginning and turned off substantially before the end of the scanning period.

In the following, a preferred embodiment of the invention is described with reference to the accompanying drawings, in which:

Fig. 1-3 are views each showing an optical system in an image reading apparatus (already referred to);

Fig. 4 is a schematic block diagram of an optical system in one embodiment of the present invention;

Fig. 5 is a detailed block diagram of an image reading portion shown in Fig. 4;

Fig. 6 is a wave-form view of each portion in Fig. 4;

Fig. 7 is a wave-form view of each portion in Fig. 5; and

Fig. 8 and Fig. 9 are wave-form views of an image reading apparatus in accordance with one embodiment of the present invention.

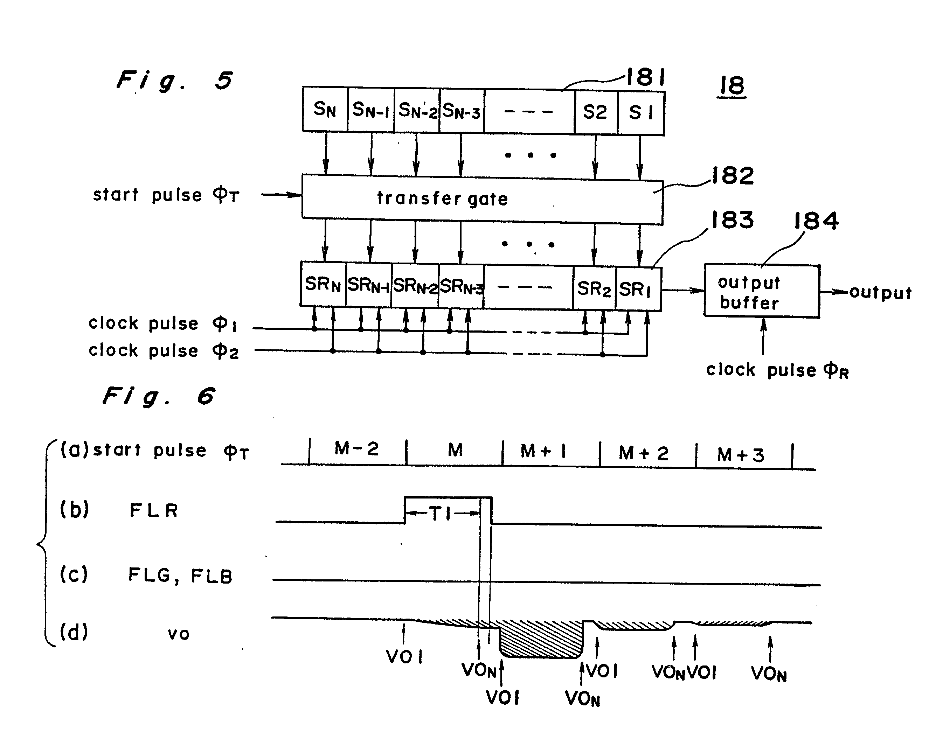

The entire construction of an image reading apparatus according to one embodiment of the present invention will be described with reference to Fig. 4. In Fig. 4, a R fluorescent lamp 13, a G fluorescent lamp 14 and a B fluorescent lamp 15 transmit red, green, blue lights respectively on the image to be read. The fluorescent-lamp lighting circuit 16 alternately turns on, for a constant period, the R fluorescent lamp 13, the G fluorescent lamp 14 and the B fluorescent lamp 15 respectively in accordance with lighting control signals FLR, FTG and FLB outputted from a control circuit 17. The image reading portion 18, which will be described in detail in Fig. 5 to be described later, is adapted to read the reflection light by a CCD sensor, which is light transmitted from the R fluorescent lamp 13, the G fluorescent lamp 14, and the B fluorescent lamp 15 and reflected by the images. A start pulse $\phi_T$, shift pulses $\phi_1$, $\phi_2$ and a reset clock pulse $\phi_R$ are fed to the image reading portion 18 from the control circuit 17. An image signal VO read out by the image reading portion 18 is fed to a sample/hold circuit 19. A sampling pulse SH is fed from the control circuit 17 to the sample/hold circuit 19. The sample/hold circuit 19 holds by samples a reading signal VO from the image reading portion 18 in accordance with this sampling pulse SH. An output signal vo held in the sample/hold circuit 19 is applied to the control circuit 17.

The detailed construction of the image reading portion 18 shown in the above-described Fig. 4 will be described hereinafter with reference to Fig. 5. The CCD sensor 181 outputs photoelectric charges in accordance with the reflected lights from the images. The photoelectric charges are fed to a transfer gate 182. A start pulse $\phi_T$ is fed to the transfer gate 182. The transfer gate 182 transfers to an analog shift register 183 the photoelectric charges coming from the CCD sensor 181 in accordance with the start pulse $\phi_T$. Shift Clock pulses $\phi_1$, $\phi_2$ are fed to the analog shift register 183. The analog shift register 183 sequentially outputs in accordance with the shift clock pulses $\phi_1$, $\phi_2$ the photoelectric charges of the CCD sensor 181 transferred from the transfer gate 182 to feed them to an output buffer 184. The output buffer 184 sequentially outputs the image data. The actually received photoelectric charge is reset by the reset clock pulse and the following photoelectric charge is received.

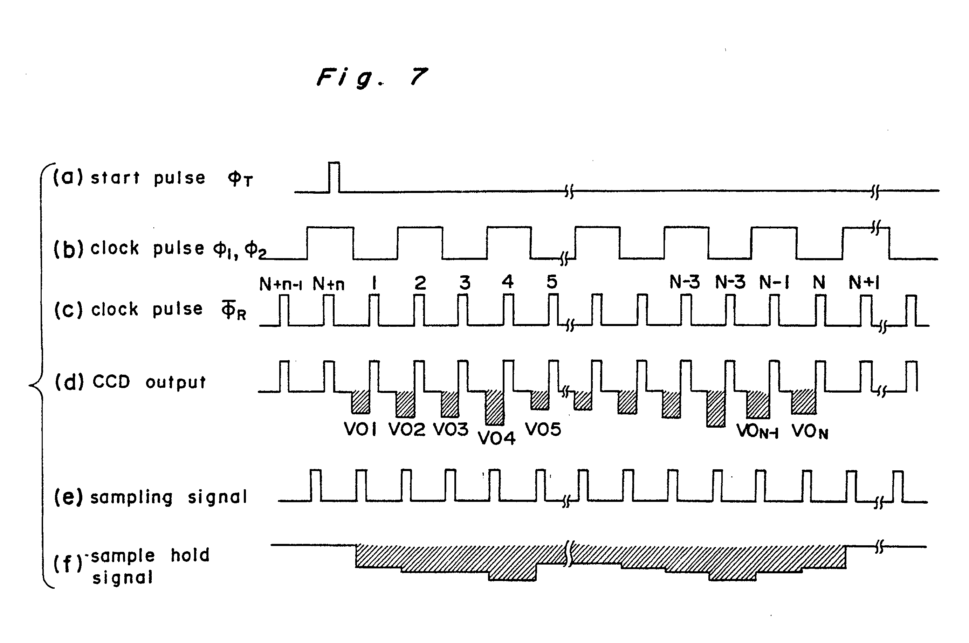

The operation of an image reading apparatus shown in Fig. 4 and Fig. 5 will be described hereinafter with reference to Fig. 6 and Fig. 7, showing wave-forms of each portion of Figs. 4 and 5, respectively. A fluorescent lamp lighting circuit 16 sequentially drives a R fluorescent lamp 13, a G fluorescent lamp 14, and a B fluorescent lamp 15 in accordance with lighting control signals FLR, FLG and FLB to be fed from the control circuit 17. Namely, when the lighting control signal FLR becomes "1", the R fluorescent lamp 13 is turned on, when the lighting control signal FLG becomes "1", the G fluorescent lamp 14 is turned on and when the lighting control signal FLB becomes "1", the B fluorescent lamp 15 is turned on. The reflected light from the image in accordance with the light from the R fluorescent lamp 13, the G fluorescent 14 and the B fluorescent lamp 15 is detected by the CCD sensor 181. Namely, when the R fluorescent lamp 13 is turned on during, a scanning period M shown in Fig. 6, the photoelectric-charges corresponding to the R information of the image are accumulated in each regions $S_1$, $S_2$, $S_3$ ..., $S_{N-1}$, $S_N$ in the CCD sensor 181. In response to a start pulse $\phi_T$ in the following scanning period M + 1 the photoelectric charges accumulated in the regions $S_1$, $S_2$, $S_3$ ..., $S_{N-1}$, $S_N$ of the CCD sensor 181 are transferred to the regions SR, $SR_2$, $SR_3$ ... $SR_{N-1}$, $SR_N$ of the analog shift register 183 via the transfer gate 182.

The analog shift register 183 transfers the loaded contents to the output buffer 184 in accordance with the shift clock pulses $\phi_1$, $\phi_2$. The output buffer 184 converts in photoelectricity the photoelectric charge transferred from the analog shift register 183 and outputs it as a CCD output signal VO. It is to be noted that the photoelectric charges to be transferred sequentially from the analog shift register 183 are reset each time within the output buffer 184 by the reset clock pulse $\phi_R$. Accordingly, as shown in Fig. 6, CCD output signals $VO_1$ $VO_2$, $VO_3$ ...., $VO_N$ corresponding to the photoelectric charges accumulated on the regions $S_1$, $S_2$, $S_3$ ... $S_N$ are outputted as shown within the scanning period M + 1. They are the normal CCD output signals.

The CCD output signal should be basically "0" in the scanning period M at the start clock pulse $\phi_T$ shown in Fig. 6. However, if the light impinges on the chip of the CCD sensor even while the photoelectric charges are being transferred to the output buffer 184 by the analog shift register 183 disposed within the image reading portion 18, some light is incident into the analog shift register 183 to cause photoelectric charges being added to the normal photoelectric charges, with the result that small CCD output signals are generated. The CCD output signals are different in level within the period of the scanning period M. Namely, the $VO_N$ shows considerable level, while the $VO_1$ is almost "0". This is because it takes a short time for the photoelectric charge accumulated on the region $S_1$ of the CCD sensor 181 to be transferred to the region $SR_1$ of the analog shift register 183 and to reach the output buffer 184, while in the $VO_N$, it takes a time $T_1$ in Fig. 6 for the photoelectric charge accumulated on the $S_N$ of the CCD sensor 181 to reach the output buffer from the transfer of the photoelectric charge to the region $SR_N$ of the analog shift register 183 so that the adding effect of the light electric-charge due to the light leakage influencing the analog shift register 183 is large. It is difficult in cost to completely remove such adding effect as described hereinabove.

In Fig. 5, the accumulated photoelectric charges on the sensor portion 181 are not completely transferred to the analog shift register portion by one start pulse $\phi_T$, thus resulting in 3 to 4% of photoelectric charges remaining. The present invention is provided to prevent deterioration in the accuracy of the color resolution, which is caused by an adding effect due to the remaining photoelectric charges through the light incident to an analog shift register portion and the incomplete transfer to the analog shift register portion.

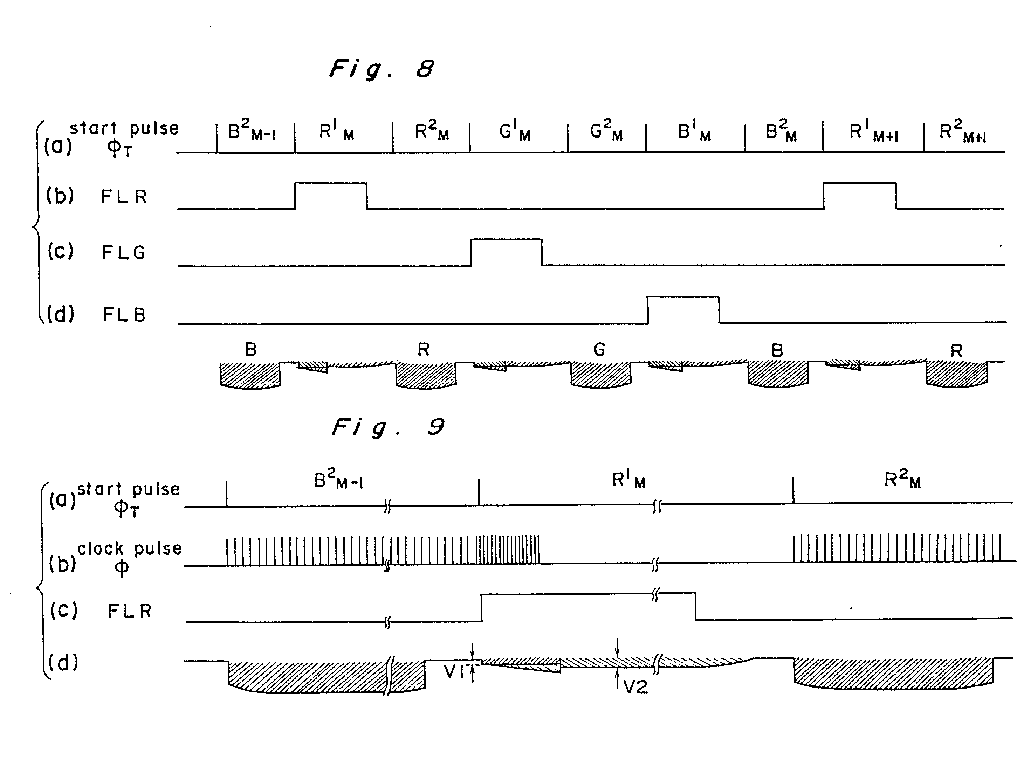

The concrete operation in one embodiment of the present invention will be described hereinafter with reference to Fig. 8 and Fig. 9, showing respectively wave-form views of an image reading apparatus. Referring to Fig. 8, the control circuit 17 operates at the scanning period of $B^2_{M-1}$, $R^1_M$, $R^2_M$, $G^1_M$, $G^2_M$, $B^1_M$, $B^2_M$, $R^1_{M+1}$, $R^2_{M+1}$, $G^1_{M+1}$, and at the scanning period of the $R^1_M$, the $G^1_M$, the $B^1_M$ among them, the R fluorescent lamp 13, the G fluorescent lamp 14 and the B fluorescent lamp 15 are sequentially turned on by the fluorescent lamp lighting circuit 16. At this time, the output of the CCD sensor 181 is neglected. In the embodiment of the present invention, the output signals of the CCD sensor 181 including the respective pure R information, G information, B information which appear at the reading periods $R^2_M$, $G^2_M$ and $B^2_M$ are used.

More details will be give with reference to Fig. 9. Among shift clock pulses for transferring the photoelectric charges to the output buffer 184 from the analog shift register 183 in Fig. 9, a shift clock pulse at the scanning period of a luminous timing is rendered faster than a shift clock pulse of the reading period. The output signal level $v_1$ of the CCD sensor 181 which appears at the scanning period $R^1_M$ is a short-shipped portion of the photoelectric charge corresponding to the B information at the former period. Also, the level $v_2$ is an output corresponding to the photoelectric charge caused by the light leakage influencing the analog shift register 183. Photoelectric-charges caused by some light leakage remain in the regions $SR_1$, $SR_2$, ... $SR_N$ of the analog shift register 183 at a time the fluorescent lamp 13 has turned off in the scanning period $R^1_M$, i.e., at the $N+n_2$ of the time of the reset clock pulse $\phi_R$. This level is

$$SR_1 > SR_2 > SR_3 > \ldots > SR_N \doteqdot 0.$$

To discharge it from the analog shift register 183, shift (transfer) clock pulses are sent by $n_3$ portions in excess ($n_3 = N$ in this invention) from it even after the R fluorescent lamp 13 has been turned off. In addition, to make this time period short, the period of the shift (transfer) clock pulse in this time period is rendered faster. The shift clock pulse of the scanning period in the respective luminous timings of not only the R fluorescent lamp 13, but also the G fluorescent lamp 14, the B fluorescent lamp 15 is rendered faster than the shift clock pulse of the reading period. In a time period during which the R fluorescent lamp 13, the G fluorescent lamp 14 and the B fluorescent lamp 15 are respectively turned on, the photoelectric charges from the CCD sensor 181 are prohibited from being transferred to the analog shift register 183, and in a time period during which they are turned off, the photoelectric charges from the CCD sensor 181 are transferred to the analog shift register 183 so that the period of the shift (transfer) clock pulse in a given time period after the lamps have been turned off is rendered faster to discharge the photoelectric charges caused by the light leakage accumulated in the analog shift register 183, with the result that the pure R, G, B which are not mixed in color are outputted as output signals vo corresponding to the R information, G information and B information.

Thus, in accordance with the present invention, it is so arranged that according to the controlling operation of a lighting control means for lighting the light source during a given time period, the output of the CCD sensor is prohibited from being fed to the analog shift means while the light source is turned on, and the output of the CCD sensor is adapted to be fed to the analog shift means so as to shift while the light source is turned off, thus preventing the accumulation of the photoelectric charges, which is caused by light leakage within a light-source lighting period, and preventing mixed-color reading through the remaining electric charges, with the result that the color resolution of the P, G, B can be performed with accuracy.

## Claims

1. Image reading apparatus comprising
   - a light source unit (13,14,15) for exposing an image,
   - an exposing control means (16) for feeding light source driving pulses to said light source unit (13,14,15) during predetermined time periods (T1),
   - a CCD-sensor (181) receiving, in a scanning period ($R^1$, $G^1$, $B^1$ the light of said light source unit (13,14,15) reflected by the image,
   - an analog shift register means (183) which receives a plurality of analog signals outputted in parallel from said CCD-sensor (181) to shift them, in a reading period ($R^2$, $G^2$, $B^2$), in accordance with shift clock pulses ($\phi_1$; $\phi_2$) having a first frequency and being fed by a clock pulse control means (17), and
   - a transfer control means (182) which prohibits the CCD-sensor outputs from being fed to said analog shift register means (183) while said light source unit (13,14,15) is turned on, and feeds the CCD-sensor outputs to said analog shift register means (183) while said light source unit (13,14,15) is turned off,

**characterized in that**

- said light source unit includes several light sources (13,14,15) transmitting light in different colours,
- during the entire of each scanning period (R$^1$,G$^1$,B$^1$), said clock pulse control means (17) to said analog shift register means (183) feeds shift clock pulses ($\phi_1$;$\phi_2$) having a second frequency higher than the first frequency, and
- within each scanning period (R$^1$,G$^1$,B$^1$), said exposing control means (16) feeds a light source driving pulse (FLR,FLG,FLB) starting with and terminating substantially before the end of the scanning period (R$^1$,G$^1$,B$^1$).

## Revendications

1. Appareil de lecture d'images comportant
   - un ensemble formant source lumineuse (13, 14, 15) destiné à exposer une image,
   - des moyens de commande d'exposition (16) destinés à délivrer des impulsions d'excitation de source lumineuse audit ensemble formant source lumineuse (13, 14, 15) pendant des périodes de temps (T1) prédéterminées,
   - un détecteur CCD (181) qui reçoit, pendant une période de balayage (R$^1$, G$^1$, B$^1$) la lumière dudit ensemble formant source lumineuse (13, 14, 15) réfléchie par l'image,
   - des moyens formant registre à décalage analogique (183) qui reçoivent plusieurs signaux analogiques émis en sortie, en parallèle, à partir dudit détecteur CCD (181) pour les transférer, pendant une période de lecture (R$^2$, G$^2$, B$^2$), en fonction d'impulsions d'horloge de décalage ($\phi_1$; $\phi_2$) qui ont une première fréquence et sont transmises par des moyens de commande d'impulsions d'horloge, (17), et
   - des moyens de commande de transfert (182) qui empêchent que les sorties de détecteur CCD ne soient transmises auxdits moyens formant registre à décalage analogique (183) pendant que ledit ensemble formant source lumineuse (13, 14, 15) est allumé, et qui transmettent les sorties de détecteur CCD auxdits moyens formant registre à décalage analogique (183) pendant que ledit ensemble formant source lumineuse (13, 14, 15) est éteint,

caractérisé en ce que

- ledit ensemble formant source lumineuse comporte plusieurs sources lumineuses (13, 14, 15) qui émettent une lumière de différentes couleurs,
- pendant la totalité de chaque période de balayage (R$^1$, G$^1$, B$^1$), lesdits moyens de commande d'impulsions d'horloge (17) en direction desdits moyens formant registre à décalage analogique (183) délivrent des impulsions d'horloge de décalage ($\phi_1$; $\phi_2$) qui ont une seconde fréquence supérieure à la première fréquence, et
- à l'intérieur de chaque période de balayage (R$^1$, G$^1$, B$^1$), lesdits moyens de commande d'exposition (16) délivrent une impulsion d'excitation de source lumineuse (FLR, FLG, FLB) qui commence avec la période de balayage (R$^1$, G$^1$, B$^1$) et se termine sensiblement avant la fin de celle-ci.

## Ansprüche

1. Bildlesegerät mit
   - einer Lichtquelleneinheit (13,14,15) zum Belichten eines Bildes,
   - einer Belichtungssteuereinrichtung (16) zum Versorgen der Lichtquelleneinheit (13,14,15) mit Lichtquellentreiberimpulsen während vorbestimmter Zeitperioden (T1),
   - einem CCD-Sensor (181), der in einer Abtastperiode (R$^1$,G$^1$,B$^1$) das von dem Bild reflektierte Licht der Lichtquelleneinheit (13,14,15) empfängt,
   - einer Analog-Schieberegistereinrichtung (183), die mehrere von dem CCD-Sensor (181) parallel ausgegebene Analogsignale empfängt, um diese in einer Leseperiode (R$^2$,G$^2$,B$^2$) in Übereinstimmung mit Schiebe-Taktimpulsen ($\phi_1$;$\phi_2$) zu verschieben, die eine erste Frequenz haben und von einer Taktimpulssteuereinrichtung (17) zugeführt werden, und
   - einer Transfersteuereinrichtung (182), die verhindert, daß die Ausgangssignale des CCD-Sensors der Analog-Schieberegistereinrichtung (183) bei eingeschalteter Lichtquelleneinheit (13,14,15) zugeführt werden, und die die Ausgangssignale des CCD-Sensors der Analog-Schieberegistereinrichtung (183) bei ausgeschalteter Lichtquelleneinheit (13,14,15) zuführt, **dadurch gekennzeichnet, daß**

- die Lichtquelleneinheit mehrere Lichtquellen (13, 14,15) enthält, die Licht in verschiedenen Farben abgeben,

- während der Gesamtdauer jeder Abtast-periode ($R^1$, $G^1$, $B^1$) die Taktimpulssteuereinrichtung (17) der Analog-Schieberegistereinrichtung (183) Schiebe-Taktimpulse ($\phi_1$ ;$\phi_2$) einer zweiten Frequenz zuführt, welche höher als die erste Frequenz ist, und

- während jeder Abtastperiode ($R^1$,$G^1$,$B^1$) die Belichtungssteuereinrichtung (16) einen Lichtquellentreiberimpuls (FLR,FLG,FLB) abgibt, der mit der Abtastperiode ($R^1$,$G^1$,$B^1$) beginnt und merklich vor deren Ende endet.

## Fig. 1

## Fig. 2

B   R
G
9

## Fig. 3

## Fig. 4

| fluorescent lamp light-on circuit | FLR FLG FLB | control circuit |
|---|---|---|

image read-in circuit

sample holding circuit

$\Phi_T$ $\Phi_1$ $\Phi_2$ $\Phi_R$     SH     $v_0$

# Fig. 5

| $S_N$ | $S_{N-1}$ | $S_{N-2}$ | $S_{N-3}$ | — — — | $S2$ | $S1$ | 181  18 |

start pulse $\phi_T$ → transfer gate  182

| $SR_N$ | $SR_{N-1}$ | $SR_{N-2}$ | $SR_{N-3}$ | — — — | $SR_2$ | $SR_1$ | → output buffer → output  183  184 |

clock pulse $\phi_1$
clock pulse $\phi_2$

clock pulse $\phi_R$

# Fig. 6

(a) start pulse $\phi_T$    | M−2 | M | M+1 | M+2 | M+3 |

(b)  FLR    T1

(c)  FLG, FLB

(d)  vo

VO1   VON   VO1   VON   VO1   VON VO1   VON

VO1   VON

EP 0 158 332 B1

Fig. 7

(a) start pulse $\phi_T$

(b) clock pulse $\phi_1, \phi_2$

(c) clock pulse $\overline{\phi}_R$

N+n-1  N+n  1  2  3  4  5  N-3  N-3  N-1  N  N+1

(d) CCD output

VO1  VO2  VO3  VO4  VO5  $VO_{N-1}$  $VO_N$

(e) sampling signal

(f) sample hold signal

EP 0 158 332 B1

## Fig. 8

(a) start pulse $\phi_T$ | $B^2_{M-1}$ | $R^1_M$ | $R^2_M$ | $G^1_M$ | $G^2_M$ | $B^1_M$ | $B^2_M$ | $R^1_{M+1}$ | $R^2_{M+1}$

(b) FLR

(c) FLG

(d) FLB

B     R     G     B     R

## Fig. 9

(a) start pulse $\phi_T$ | $B^2_{M-1}$ | $R^1_M$ | $R^2_M$

(b) clock pulse $\phi$

(c) FLR

(d)

V1   V2